# EUROPEAN PATENT SPECIFICATION

(11) **EP 2 910 504 B1**
(45) Date of publication and mention of the grant of the patent: **01.05.2019**
(21) Application number: 15154747.8
(22) Date of filing: 11.02.2015
(51) Int. Cl.: B65G 49/06

(54) **GLASS SHEET LOADING/UNLOADING MACHINE FOR A SHEET WORKING PLANT**
MASCHINE ZUM AUF-/ABLADEN VON GLASSCHEIBEN FÜR EINE SCHEIBENBEARBEITUNGSANLAGE
MACHINE DE CHARGEMENT/DÉCHARGEMENT DE FEUILLE DE VERRE POUR UNE INSTALLATION D'USINAGE DE FEUILLE

(30) Priority: 11.02.2014 IT TO20140110
(43) Date of publication of application: 26.08.2015
(73) Proprietor: Bottero S.p.A., 12100 Cuneo (IT)
(72) Inventor: Boggero, Enrico, 12100 Cuneo (IT); Bottero, Francesco, 12010 Vinadio (IT); Blengino, Lorenzo, 12100 Cuneo (IT)
(74) Representative: Boggio, Luigi

(56) References cited:
- EP-A1- 1 591 427
- FR-A1- 2 012 911
- JP-A- H1 111 661
- US-A1- 2010 011 935

## Description

The present invention relates to a glass sheet loading/unloading unit for a glass sheet working plant, and in particular to a glass sheet scoring and separating plant, to which explicit reference will be made hereinafter without because of this losing in generality.

It is known to use automated cutting plants for cutting glass sheets comprising a scoring machine on which an extended sheet is at least partially scored according to a predetermined cutting program; a separating machine arranged downstream of the scoring machine in the sense of advancement of the extended sheet to separate the scored sheet along previously drawn scoring lines; a store housing the extended sheets to be fed to the scoring machine and a store housing non-scored pieces or portions of the glass sheet separated on the separating machine.

Finally, the plant comprises a machine for sheet loading/unloading for loading the extended sheets to be scored on the scoring machine and for unloading the pieces or portions of non-scored sheets returning through the scoring machine itself.

Indeed, in many cutting cycles the partially scored extended sheet is moved on the separating machine and broken preliminarily along the scoring line which separates the scored sheet portion from the non-scored sheet portion. After the separating, the scored sheet portion is gradually broken, while the non-scored portion of the extended sheet is either returned to or retracted on the scoring machine, and from there is transferred onto the resting surface of the loading/unloading machine, which moves towards the non-scored sheet store and transfers it to the store itself as soon as the sheet is received. For this purpose, the loading/unloading machine comprises a table defining a resting surface for both the extended sheets to be fed and for moving the returned pieces away.

Although used, the cutting plants of the known type described above are not fully satisfactory, above all because the production frequencies cannot be increased beyond given values even by increasing the production frequency of the cutting machine or of the separating machine.

The above is substantially due to the features of the sheet loading/unloading machine. Indeed, after having loaded the extended sheet on the scoring machine, such a machine waits for the delivery of the non-scored sheet portion, loads it aboard and moves towards the non-scored piece or sheet store, unloads it to the store, moves towards a loading position of a new extended sheet and feeds it to the scoring machine.

For as long as the non-scored sheet portion remains on the separating machine, on the scoring machine and on the loading/unloading machine, a new extended sheet cannot be advanced on the scoring machine, which thus remains in a non-operating condition waiting for the new extended sheet to be scored.

Machines for handling glass sheet are disclosed, for example, in FR 2,012,911 and US 2010/001935 A1.

It is the object of the present invention to make a sheet loading/unloading unit, which allows to solve the problem illustrated above in simple and cost-effective manner, and in particular which allows to have an extended glass sheet always available to be fed as soon as the cutting machine can receive a sheet to be scored.

According to the present invention, a glass sheet loading/unloading unit is made as disclosed in claim 1.

The invention will now be described with reference to the accompanying drawings which illustrate a non-limitative embodiment thereof, in which:
figure 1 is a perspective view of a preferred embodiment of a glass sheet loading/unloading unit according to the dictates of the present invention coupled to a sheet cutting machine;
figure 2 is a side view of the unit in figure 1; and
figure 3 shows the unit in figures 1 and 2 arranged in a different functional condition.

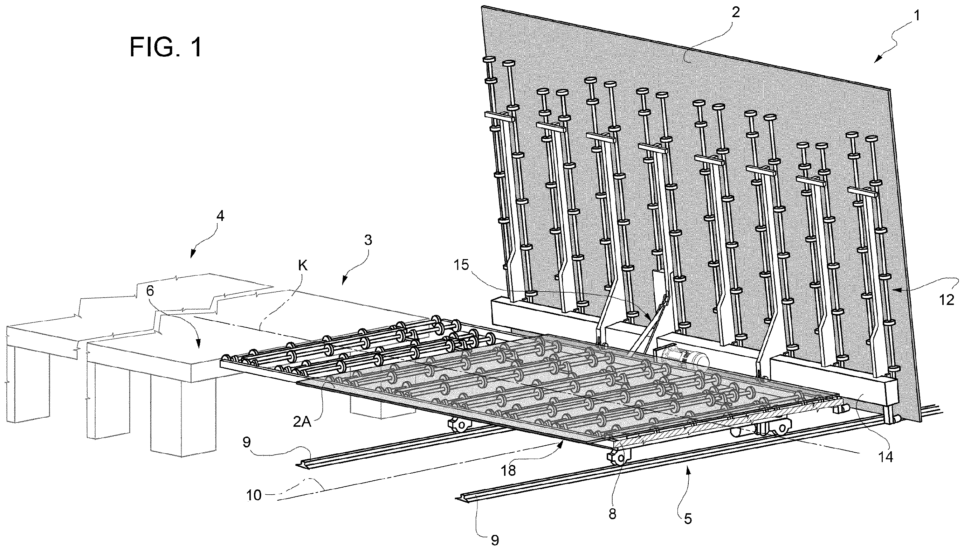

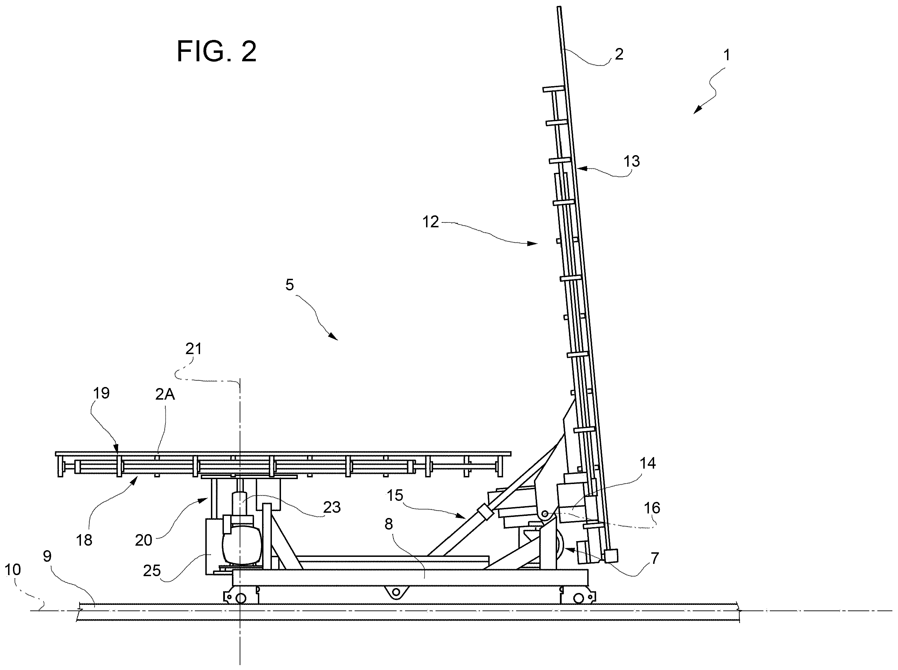

In figures 1 and 2, reference numeral 1 indicates as a whole a system for working an extended sheet 2 of glass, normally a 6100x3210 millimeter sheet.

The plant 1 comprises a scoring machine 3 (known in itself) and a separating machine 4 (also known in itself and partially shown) arranged downstream of the scoring machine 3 in the sense of advancement K of the extended sheets 2 to be worked towards an inlet of the machine 3.

Furthermore, the plant 1 comprises a machine 5, which defines a loading unit of the extended sheet 2 and managing a non-scored portion or piece 2A of the broken sheet 2 on the machine 4 returning towards the loading/unloading machine 5 through the scoring machine 3 again in direction K.

Again with reference to figures 1 and 2, the scoring machine 3 has a horizontal sheet resting surface 6 thereof at the sheet inlet/outlet, while the machine 5 comprises a frame 7 thereof and a motorized carriage 8 supporting the frame 7 and sliding in opposite senses along two rails 9 in a direction 10 orthogonal to direction K.

The machine 5 then comprises a moveable table 12 defining a resting surface 13, conveniently but not necessarily with idle or motorized rollers, for supporting the extended sheet 2 to be fed to the machine 3.

The moveable table 12 has a longitudinal portion or side 14 orthogonal to direction 10 hinged to the frame 7 underneath to turn about a longitudinal axis 16 orthogonal to the direction, and parallel to and eccentric with respect to a longitudinal symmetry axis of the table 12.

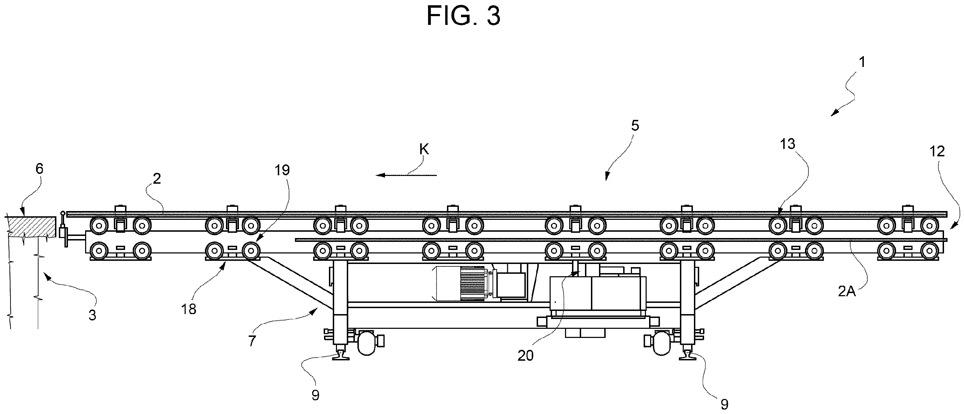

The table 12 is moveable under the bias of the pneumatic or hydraulic jacks 15, only one of which is shown in the accompanying drawings, between a raised loading position of the sheet 2, shown in figures 1 and 2, and a lowered transferring position, shown in figure 3. Alternatively, the pneumatic jacks are replaced by a motorized connecting rod/crank system.

When it is arranged in its tilted position, the table 12 and thus the loading surface 13 extend in substantially vertical position to receive the extended sheet 2 itself, fed sideways, conveniently from an overhead loading assembly, e.g. a bridge crane or another equivalent known floor mounted loading assembly or from stands.

Instead, when the table 12 is arranged in its lowered position, its loading surface 13 is arranged horizontally and in position coplanar with the surface 6 of the scoring machine 3.

Again with reference to figures 1 and 2, the machine 5 further comprises a further moveable table 18 delimiting a horizontal loading surface 19 adapted to support the piece 2A coming from the scoring machine 3.

The moveable table 18 is arranged over the frame 7 and under the moveable table 12 when the table 12 is arranged in its lowered position (figures 3) and is coupled to the frame 7 itself by means of a guiding and sliding assembly 20 (known in itself and not described in detail) adapted to translate the table 18 parallel to itself in a vertical direction 21.

The table 18 is guided vertically and displaced parallel to itself by a pneumatic or hydraulic linear actuator 23 (fig. 2) (known in itself and not described in detail) and supported by the frame 7, between a raised receiving/transferring position of the piece 2A of the scoring machine 3 (figure 1 and 3), in which the loading surface 19 is arranged in position coplanar with the surface 6, and a lowered position (figure 3), in which the loading surface 19 extends in lowered position with respect to the surface 6 and to the table 12 (figure 3).

The tables 12 and 18 are controlled by a governing unit 25 of the machine 5 and are mutually synchronized so that when the table 18 is arranged in its raised position, the table 12 is arranged either in its raised loading position or in an intermediate position such as not to interfere with the table 18.

In use, starting from the condition in which the table 12 is arranged in its raised position and the surface 19 is arranged in its lowered position, a sheet 2 is loaded onto the table 12; after this, the table 12 is turned and taken to its lowered position and, when this position is reached, the sheet 2 is transferred directly onto the scoring machine 3 advancing it in direction K on the surface 6.

At this point, the sheet 2 is scored by the scoring machine 3, thus transferred to the separating machine 4, in which the sheet 2 is firstly broken by separating the scored part from the non-scored part which forms the piece 2A.

Once separated, the piece 2A is returned towards the loading machine 5 through the scoring machine 3.

After having transferred the extended sheet 2 to the machine 3 or later, the table 12 is returned to its raised position and the table 18 is taken to its raised position, in which it waits for the piece 2A to exit from the machine 3.

As soon as the table 12 reaches its raised position or at later moment, a new sheet 2 is loaded onto the table 12 and as soon as the piece 2A lays on the table 18, the table 18 itself is lowered and the new sheet 2 is advanced to the machine 3; after this, the table 12 is raised again and the piece 2A is unloaded from the table 18 and either stored or retained aboard the table 18, to then be loaded onto the machine 3 if the predetermined cutting program permits it.

According to a variant (not shown), the table 12 is no longer hinged to the frame 7 but is also either stably connected to the mentioned guiding and sliding assembly 20 or hinged to the assembly 20 itself, over the table 18, so as to be arranged in position parallel and transversely distanced from the table 18 itself. In this manner, when the table 12 is arranged in its lowered position, the two tables 12 and 18 translate simultaneously in vertical direction between a first operating position, in which the surface 13 is substantially parallel to and coplanar with the surface 6, and a second operating position, in which the surface 19 is parallel to and coplanar with the surface 6.

Alternatively, according to a variant (not shown), the two resting surfaces are both displaced vertically by respective mutually independent actuator assemblies.

From the above, it is apparent that the described machine 5 is a unit in itself, in which the presence of two resting surfaces which are either mutually distinct and independent or selectively positionable in a same operating position with respect to the resting surface 6 of the scoring machine 3 allows, with respect to the known solutions, to make an extended sheet or a piece of sheet to be worked always available at the inlet of the scoring machine 3, thereby canceling, in practice, the waiting times of the machine 3 regardless of the predetermined cutting cycle.

## Claims

1. A glass sheet loading/unloading unit, the loading/unloading unit comprising a motorized carriage moveable in opposite senses in a direction of translation, a first table having a first resting surface of the sheets and coupled to said carriage at least to turn about a hinge axis orthogonal to the said direction of translation, first actuator means for turning the first table and the first resting surface to and from a lowered position, in which said first surface is arranged in horizontal position, **characterized in that** it further comprises a second moveable table supported by said carriage, having a second horizontal resting surface and distinct from said first table for supporting an other glass sheet; second actuator means being interposed between said second table and said carriage to translate said second table parallel to itself in a vertical direction; said second sheet resting surface being arranged under said first table and vertically spaced away from said first table for supporting the other glass sheet when the first sheet supporting table is arranged in its lowered position.

2. A unit according to claim 1, **characterized in that** said first table is moveable between said lowered position and a raised sheet loading position.

3. A unit according to claim 1 or 2, **characterized in that** said hinge axis is a fixed axis on said carriage.

4. A unit according to any one of the preceding claims, **characterized in that** said hinge axis is parallel to a sheet loading/unloading direction to/from said first and second resting surface when said first table is arranged in said lowered position.

5. A unit according to any one of the preceding claims, **characterized in that** it comprises rectilinear guiding means arranged between said carriage and said first table and further actuator means for translating said first sheet supporting table with respect to said carriage in a vertical direction.

6. A unit according to claim 1, **characterized in that** it comprises further motorized actuator means interposed between said first and second table and said carriage to move the first and the second sheet supporting plane vertically and simultaneously.

## Patentansprüche

1. Eine Glasscheiben-Belade-/Entladeeinheit, wobei die Belade-/Entladeeinheit aufweist einen motorisierten Schlitten, der in einer Translationsrichtung gegensinnig bewegbar ist, einen ersten Tisch mit einer ersten Auflagefläche der Scheiben, wobei der erste Tisch mit dem Schlitten gekoppelt ist, um sich um eine Scharnierachse orthogonal zur Translationsrichtung zu drehen, eine erste Aktoreinrichtung zum Drehen des ersten Tisches und der ersten Auflagefläche in eine niedrige und aus einer niedrigen Position, in der die erste Oberfläche in horizontaler Position angeordnet ist, **dadurch gekennzeichnet, dass** sie ferner umfasst einen zweiten von dem Schlitten gestützten bewegbaren Tisch mit einer zweiten horizontalen Auflagefläche, die verschieden ist von dem ersten Tisch zum Stützen einer anderen Glasscheibe, eine zweite Aktoreinrichtung, die zwischen dem zweiten Tisch und dem Schlitten angeordnet ist, um den zweiten Tisch parallel zu sich selbst in eine vertikale Richtung translatorisch zu verschieben, wobei die zweite Auflagefläche zum Stützen der anderen Glasscheibe unter dem ersten Tisch und vertikal beabstandet zum ersten Tisch angeordnet ist, wenn der erste scheibenstützende Tisch in seiner niedrigen Position angeordnet ist.

2. Eine Einheit nach Anspruch 1, **dadurch gekennzeichnet, dass** der erste Tisch zwischen der niedrigen Position und einer erhöhten Scheibenladeposition bewegbar ist.

3. Eine Einheit nach Anspruch 1 oder 2, **dadurch gekennzeichnet, dass** die Scharnierachse eine feste Achse auf dem Schlitten ist.

4. Eine Einheit nach einem der vorhergehenden Ansprüche, **dadurch gekennzeichnet, dass** die Scharnierachse parallel zu einer Scheibenbe- und -entladerichtung zu/von der ersten und zweiten Auflagefläche ist, wenn der erste Tisch in der niedrigen Position angeordnet ist.

5. Eine Einheit nach einem der vorhergehenden Ansprüche, **dadurch gekennzeichnet, dass** sie geradlinige Führungsmittel, die zwischen dem Schlitten und dem ersten Tisch angeordnet sind, und weitere Aktoreinrichtungen zum translatorischen Verschieben des ersten scheibentragenden Tisches in Bezug auf den Schlitten in eine vertikale Richtung umfasst.

6. Eine Einheit nach Anspruch 1, **dadurch gekennzeichnet, dass** sie weitere motorisierte Aktoreinrichtungen umfasst, die zwischen dem ersten Tisch und dem zweiten Tisch und dem Schlitten angeordnet sind, um die erste und die zweite Auflagefläche vertikal und gleichzeitig zu bewegen.

## Revendications

1. Unité de chargement/déchargement de feuille de verre, l'unité de chargement/déchargement comprenant un chariot motorisé mobile dans des sens opposés dans une direction de translation, une première table ayant une première surface de support de feuilles et couplée audit chariot au moins pour tourner autour d'un axe de charnière orthogonal à ladite direction de translation, des premiers moyens d'actionnement pour faire tourner la première table et la première surface de support vers et depuis une position abaissée, dans laquelle ladite première surface est agencée en position horizontale, **caractérisée en ce qu'**elle comprend en outre une deuxième table mobile supportée par ledit chariot, ayant une deuxième surface de support horizontale et distincte de ladite première table pour supporter une autre feuille de verre ; des seconds moyens d'actionnement étant interposés entre ladite seconde table et ledit chariot pour translater ladite seconde table parallèlement à elle-même dans une direction verticale ; ladite deuxième surface de support de feuille étant agencée sous ladite première table et espacée verticalement de ladite première table pour supporter l'autre feuille de verre lorsque la première table de support de feuille est agencée dans sa position abaissée.

2. Unité selon la revendication 1, **caractérisée en ce que** ladite première table est mobile entre ladite position abaissée et une position de chargement de feuille surélevée.

3. Unité selon la revendication 1 ou 2, **caractérisée en ce que** ledit axe de charnière est un axe fixe sur ledit charriot.

4. Unité selon l'une quelconque des revendications précédentes, **caractérisée en ce que** ledit axe de charnière est parallèle à une direction de chargement/déchargement de feuille de/vers lesdites première et seconde surfaces de support lorsque ladite première table est agencée dans ladite position abaissée.

5. Unité selon l'une quelconque des revendications précédentes, **caractérisée en ce qu'**elle comprend des moyens de guidage rectilignes agencés entre ledit chariot et ladite première table et des moyens d'actionnement supplémentaires pour translater ladite première table de support de feuilles par rapport audit chariot dans une direction verticale.

6. Unité selon la revendication 1, **caractérisée en ce qu'**elle comprend des moyens d'actionnement motorisés supplémentaires interposés entre lesdites première et seconde tables et ledit chariot pour déplacer les premier et second plans de support de feuilles verticalement et simultanément.
